# EUROPEAN PATENT APPLICATION

(11) **EP 0 723 096 A2**
(43) Date of publication of application: **24.07.1996**
(21) Application number: 96100332.4
(22) Date of filing: 11.01.1996
(51) Int. Cl.: F16H 59/04, B60K 20/02

(54) **A control system for a motor-vehicle gear box**

(30) Priority: 18.01.1995 IT TO950028
(71) Applicant: SILA HOLDING INDUSTRIALE S.r.l., 10121 Torino (IT)
(72) Inventor: Lomagno, Mauro, I-10060 Frossasco (Torino) (IT)
(74) Representative: Marchitelli, Mauro

(57) **Abstract**

A control system for a motor-vehicle gear box includes an operating member (2) which includes a lever (3) which can pivot about two pivot axes (A, B) having a common point of intersection. The lever (3) may take up a neutral position identifying a reference axis (C) or a plurality of operative positions. Two arms (10, 12) fixed to the operating member (2) include connecting portions for connection to respective transmission elements (11, 13) associated with the gear box and extending parallel to the reference axis (C) close to the operating member (2). The arms (10, 12) are arranged such that a pivotal movement of the operating member (2) about a pivot axis (A, B) causes one of the connecting portions (10a, 12a) to move in a direction parallel to the reference axis (C). The operating member (2) includes a ball joint (5) fixed to the lever (3), the centre of which coincides with the point of intersection of the pivot axes (A, B). The reference axis (C) also passes through the centre of the ball joint (5).

## Description

The present invention relates to control systems for motor-vehicle gear boxes and more specifically to manually-operable control systems for causing the selection and engagement of the gears.

More particularly, the invention relates to a control system of the type comprising: an operating member including a lever pivotable about two pivot axes having a common point of intersection such that the lever may take up a neutral position identifying a reference axis or one of a plurality of operative positions spaced from each other and from the neutral position, and two arms fixed to the operating member, each of which has a connecting portion intended for connection to a respective transmission element, for selection or engagement respectively, associated with the motor-vehicle gear box, in which the transmission elements close to the operating member extend substantially parallel to the reference axis, the arms being arranged so that a pivotal movement of the operating member about one of the pivot axes causes one of the connecting portions to move in a direction substantially parallel to the reference axis.

A system of the type indicated above is known from Italian Patent Application TO92A000531. More particularly, this relates to a gear control in which an operating lever is mounted for pivotal movement about a first support pin which is in turn pivotable about a second pin perpendicular to the first pin. In order to ensure that the lever can pivot about the first pin and the first pin can pivot about the second pin, it is necessary to mount a sleeve on each pin with the interposition of a pair of bearings between the sleeves and the respective pins.

This known solution has disadvantages due to the fact that the entire device includes a large number of components whereby it is expensive to produce and requires relatively long and complicated operations for assembly.

The object of the present invention is to provide a control system for gear boxes of the type defined above which does not have these disadvantages.

This object is achieved by virtue of the fact that the operating member includes a ball joint fixed to the lever and in that the point of intersection of the pivot axes coincides with the centre of the ball, the reference axis also passing through the centre of the ball.

By virtue of these characteristics, the system of the invention is particularly simple, light, compact and reliable and may be manufactured with particularly low production costs.

Further characteristics and advantages of the present invention will become more apparent during the course of the detailed description which follows, given purely by way of non-limitative example, with reference to the appended drawings, in which:

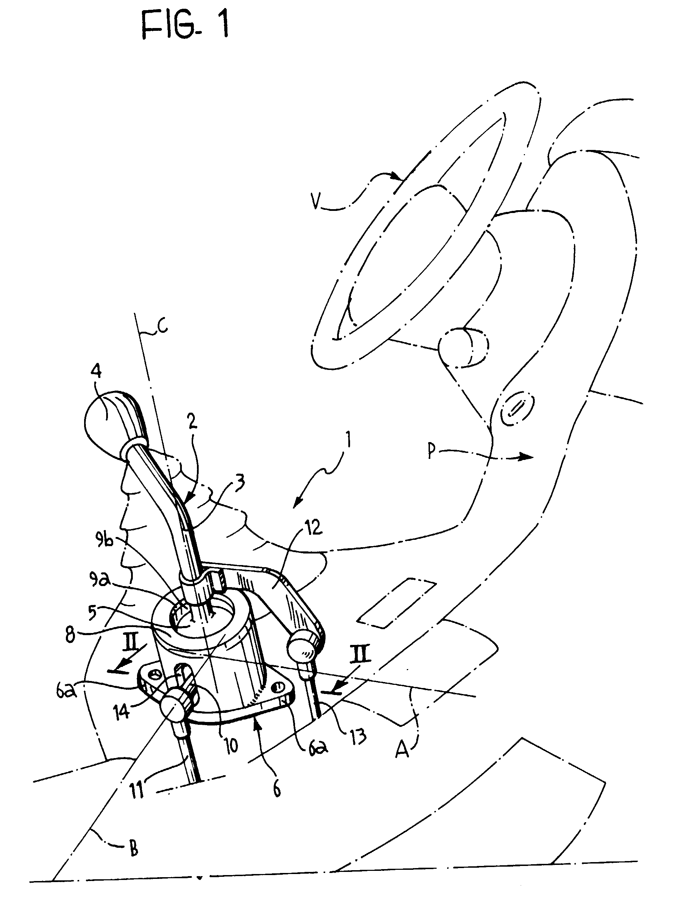

- Figure 1 is a perspective view of a control system according to the invention,

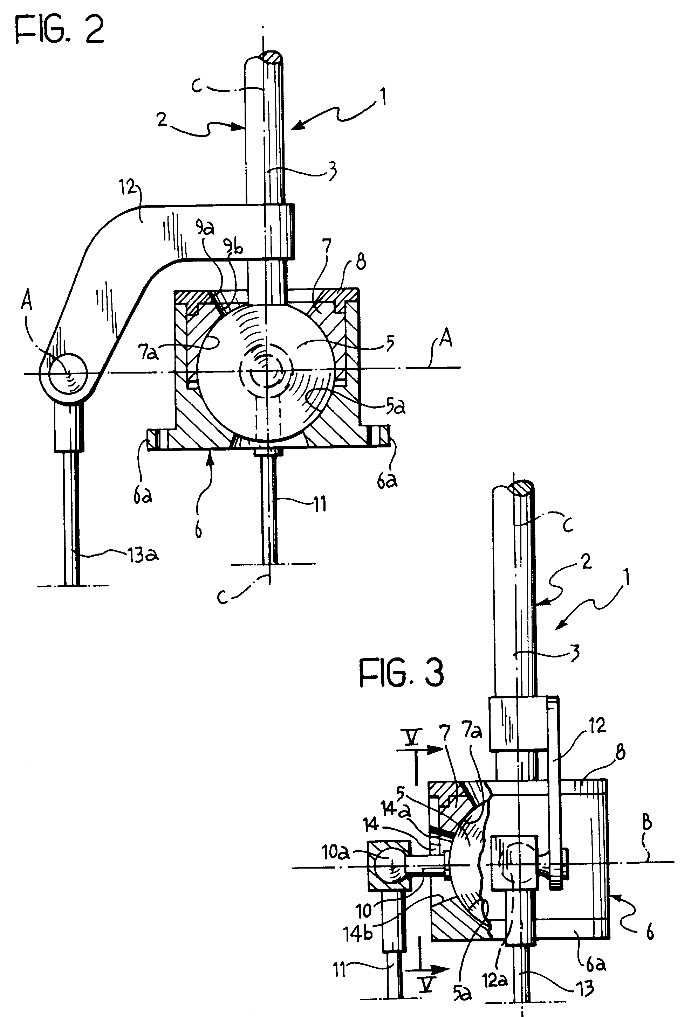

- Figure 2 is a side elevational view sectioned along the line II-II of Figure 1,
- Figure 3 is a sectioned front elevational view of the system of Figure 1,
- Figure 4 is a plan view of the system of Figure 1, and
- Figure 5 is an elevational view taken on the line V-V of Figure 3.

With reference to the drawings, a control system for a motor-vehicle gear box is generally indicated 1.

The system 1 includes an operating member 2 which includes a lever 3 having a hand grip 4 at one end and a ball joint 5 at its opposite end. The ball 5 engages a hemispherical seat 5a defined in a support base 6 and is locked to the base 6 by means of an auxiliary hemispherical body 7 defining another hemispherical seat 7a substantially complementary with the seat 5a.

A cover 8 covers the top of the base 6 preventing the body 7 and the ball 5 from coming out of the base 6.

The base 6 has a pair of attachment lugs 6a each with at least one hole for fixing the base 6 to the motor vehicle, in particular, in a position above the floor of the motor vehicle such as alongside the steering wheel V and close to the dashboard P.

Thanks to the ball 5 and the spherical seat defined by the base 6 and the body 7, the lever 3 can pivot relative to the base 6 about the centre of the ball 5. In order to allow the lever 3 to pivot, the cover 8 and the body 7 have respective apertures 9a and 9b, for example of frusto-conical form, through which the lever 3 extends.

The lever 3 can pivot about two pivot axes, a longitudinal axis A and a transverse axis B, which intersect at the centre of the ball 5 and are preferably perpendicular to each other. Thus the lever 3 may take up a neutral position which identifies a reference axis C also passing through the centre of the ball 5 or one of a plurality of operative positions spaced from each other and from the neutral position identified by the axis C, each of which corresponds to a gear selection or engagement position.

More particularly, the lever 3 can pivot about the longitudinal axis A to allow the selection of a pair of gears or about the transverse axis B to allow the engagement of one gear of the pair identified by the selection movement. The selection movement of the lever 3 is limited by the dimensions of the apertures 9a, 9b.

Two fixed arms project from the operating member 2 and each has a respective associated element for the transmission of the selection movement or the engagement movement to the gear box. A first arm is constituted by a pin 10 which projects radially from the ball 5 and has a spherical head l0a for connection by a ball joint to a Bowden selection cable 11.

A second arm is constituted by an arcuate bracket 12 fixed to the lever 3 perpendicular to the pin 10 and also having a spherical head 12a for connection by a ball joint to a Bowden selection cable 13. Preferably the centre of the spherical head l0a is located on the axis B, the pin 10 being coaxial with the axis B and the centre of the spherical head 12a is located on the axis A.

The portions of the cables 11 and 13 which are close to the ball 5 extend substantially parallel to the reference axis C and a pivotal movement of the lever 3 about the axis A or about the axis B causes the head 10a or the head 12a to move in a respective direction substantially parallel to the reference axis C.

The pin 10 passes through a guide slot 14 formed in one side of the base 6 so as to extend parallel to the reference axis C. The longitudinal extent of the slot 14 defines the extreme pivotal positions to which the lever 3 may move. More particularly, the opposite ends 14a, 14b of the slot 14 define a pair of opposite travel-limit abutment surfaces for stopping the movement of the pin 10 along the slot 14 and, consequently, for stopping the selection movement of the lever 3. Naturally the dimensions of the slot 14 and of the pin 10 are such as to minimise relative play and enable the selection movement to be very precise.

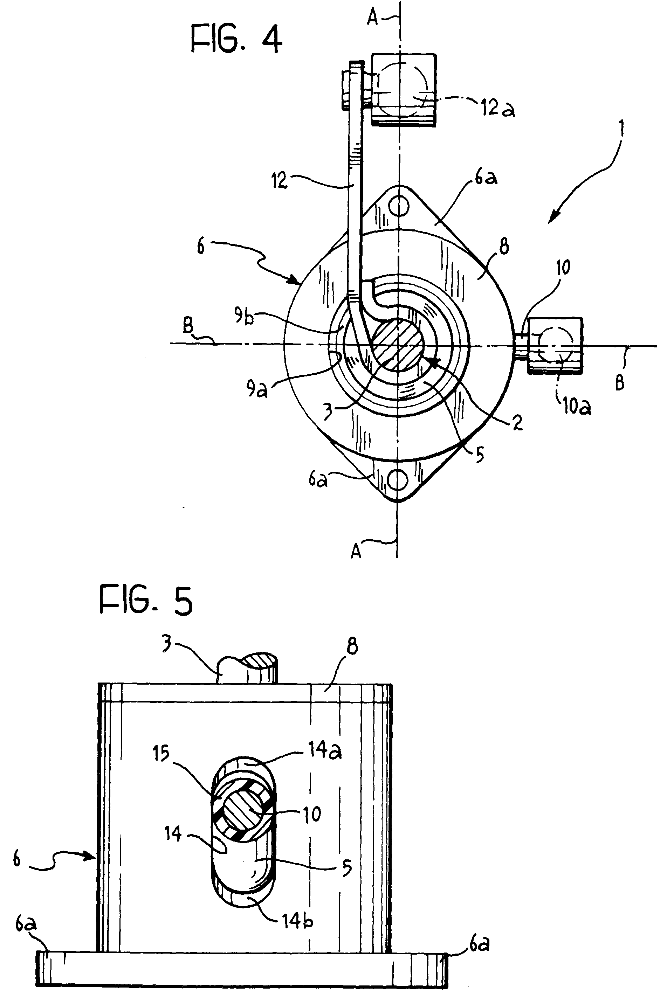

Conveniently, a layer of anti-friction material is provided between the pin 10 and the surfaces of the slot 14 in order to facilitate the sliding of the pin 10 along the slot 14. This anti-friction material, for example TEFLON, may be a bush 15 surrounding the pin 10 (Figure 5) or may be a coating on the walls of the slot 14.

## Claims

1. A control system for a motor-vehicle gear box, comprising:
- an operating member (2) including a lever (3) pivotable about two pivot axes (A, B) having a common point of intersection such that the lever (3) may take up a neutral position identifying a reference axis (C) or a plurality of operative positions spaced from each other and from the neutral position, and
- two arms (10, 12) fixed to the operating member (2), each of which has a connecting portion (10a, 12a) intended for connection to a respective transmission element, for selection (13) or engagement (11) respectively, associated with the motor-vehicle gear box, in which the transmission elements (11, 13) close to the operating member (2) extend substantially parallel to the reference axis (C), the arms (10, 12) being arranged so that a pivotal movement of the operating member (2) about one of the pivot axes (A, B) causes one of the connecting portions (10a, 12a) to move in a direction substantially parallel to the reference axis (C),
characterised in that the operating member (2) includes a ball joint (5) fixed to the lever (3) and in that the point of intersection of the pivot axes (A, B) coincides with the centre of the ball (5), the reference axis (C) also passing through the centre of the ball (5).

2. A control system according to Claim 1, characterised in that it is intended to be mounted in a position above the floor of the motor vehicle, particularly at the side of the steering wheel close to the dashboard.

3. A control system according to Claim 1 or Claim 2, characterised in that the pivot axes (A, B) are perpendicular to each other and each of them passes through the centre of the ball (5) and through one of the connecting portions (10, 12a).

4. A control system according to Claim 3, characterised in that one of the arms is a pin (10) which projects radially from the ball (5) and the other includes a bracket (12) fixed to the lever (3).

5. A control system according to Claim 4, characterised in that the ball (5) engages a corresponding spherical seat (5a, 7a) having a guide slot (14) for guiding the movement of the pin (10).

6. A control system according to Claim 5, characterised in that the slot (14) extends parallel to the reference axis (C) and in that its opposite ends (14a, 14b) define a pair of opposed abutment surfaces for limiting pivotal movement of the pin (10).

7. A control system according to Claim 6, characterised in that a bush (15) of anti-friction material is interposed between the pin (10) and the slot (14).

8. A control system according to Claim 6, characterised in that the slot (14) is bounded by walls coated with anti-friction material.

9. A control system according to Claim 1, characterised in that the transmission means (11, 13) are flexible Bowden cables.

10. A control system according to Claim 1, characterised in that each of the connecting portions (10a, 12a) of the arms (10, 12) is attached to the respective transmission element (11, 13) by a ball joint.
